(19) Europäisches Patentamt
European Patent Office
Office européen des brevets

(11) **EP 1 350 618 B1**

(12) **EUROPEAN PATENT SPECIFICATION**

(45) Date of publication and mention
of the grant of the patent:
**14.01.2009 Bulletin 2009/03**

(51) Int Cl.:
***B32B 27/36*** *(2006.01)*    ***G02B 5/28*** *(2006.01)*
***H01J 11/02*** *(2006.01)*    ***G09F 9/00*** *(2006.01)*

(21) Application number: **01997192.8**

(22) Date of filing: **22.11.2001**

(86) International application number:
**PCT/JP2001/010239**

(87) International publication number:
**WO 2002/042073 (30.05.2002 Gazette 2002/22)**

(54) **MULTILAYERED FILM AND NEAR-INFRARED-RAY REFLECTION FILM**

MEHRSCHICHTIGE FOLIE UND NAHINFRAROTSTRAHLUNGS-REFLEXIONSFOLIE

FILM MULTICOUCHE ET FILM DE REFLEXION PROCHE INFRAROUGE

(84) Designated Contracting States:
**DE FR GB**

(30) Priority: **27.11.2000 JP 2000359135**
         **27.11.2000 JP 2000359136**

(43) Date of publication of application:
**08.10.2003 Bulletin 2003/41**

(73) Proprietor: **TEIJIN LIMITED**
**Osaka-shi**
**Osaka 541-0054 (JP)**

(72) Inventors:
• **OYA, Taro,**
**c/o Teijin DuPont Films Japan Limited**
**Apachi-gun, GIFU 503-0123 (JP)**
• **MUROOKA, Hirofumi,**
**c/o Teijin DuPont Films Japan Limited**
**Anpachi-gun, GIFU 503-0123 (JP)**

(74) Representative: **Hallybone, Huw George et al**
**Carpmaels & Ransford**
**43-45 Bloomsbury Square**
**London WC1A 2RA (GB)**

(56) References cited:
**EP-A- 0 735 952**      **EP-A2- 0 469 732**
**WO-A-96/19347**      **WO-A-97/01778**
**WO-A1-95/17303**      **WO-A1-97/01774**
**WO-A1-97/01778**      **WO-A2-96/19347**
**JP-A- 9 300 518**      **JP-A- 2000 141 567**
**US-A- 5 360 659**

• **PATENT ABSTRACTS OF JAPAN vol. 2000, no. 08, 6 October 2000 (2000-10-06) & JP 2000 141567 A (TEIJIN LTD), 23 May 2000 (2000-05-23)**

**Description**

Technical Field

The present invention relates to a near infrared light reflecting film for a front panel of a plasma display using a multilayer film. More specifically, it relates to a near infrared light reflecting film for a front panel of a plasma display using a multilayer film in which a layer having a low refractive index and a layer having a high refractive index are laminated alternately and which selectively reflects light of given wavelength range with a ratio of maximum thickness/ minimum thickness of each of the layers controlled.

Background Art

When a layer having a low refractive index and a layer having a high refractive index are laminated alternately several times so as to form a multilayer laminated film, an optical interference film which selectively reflects light of specific wavelength or transmits the light therethrough by structural light interference in between these layers is obtained. When such a multilayer laminated film has a wavelength of selectively reflected or transmitted light within visible range, the multilayer laminated film can be formed for a film having an excellent design due to structural coloration, e.g., a film having an iridescent appearance. Further, since the design is obtained by the structural coloration of the multilayer laminated film and uses no dyes, the film is free from a problem of color fading. In addition, since the multilayer laminated film exhibits high light reflectance without using metals, it can be used as a metal gloss film or a reflecting mirror. Furthermore, a refractive index in the surface direction between the layers or in the layer of the multilayer laminated film can be further controlled by stretching. For example, if anisotropy is imparted to the refractive index in the surface direction in the layer, the multilayer laminated film becomes a reflection polarizing plate.

JP-A 4-295804 (the term "JP-A" as used herein means an "unexamined published Japanese patent application") discloses a reflective polymeric object comprising at least first and second polymer materials of different types. The reflective polymeric object comprises a sufficient number of layers composed of the first and second polymer materials so that at least 30% of light entering the polymeric object is reflected. Some of the layers have an optical thickness of 0.09 to 0.45 $\mu$m, and the other layers have an optical thickness of not larger than 0.09 $\mu$m or not smaller than 0.45 $\mu$m. A difference in refractive index between the first and second polymer materials is at least about 0.03, and light reflected by the polymeric object contains no visible color.

As a multilayer laminated stretched film obtained by stretching such a multilayer laminated film, JP-A 9-506837 discloses a multilayered polymer film in which a crystalline naphthalenedicarboxylic acid polyester and another selected polymer having a lower refractive index with respect to at least one in-plane axis are laminated alternately. The multilayered polymer film has a thickness of smaller than 0.5 $\mu$m, and a refractive index with respect to at least one in-plane axis of the crystalline naphthalenedicarboxylic acid polyester layer is higher than that of an adjacent layer of the selected polymer. Further, JP-A 9-506984 discloses a reflective polarizer using such a multilayered polymer film.

However, these multilayered polymer films can selectively reflect only light of very narrow wavelength range due to regularity of optical thickness. To expand the wavelength range of light which can be selectively reflected, polymers with a large difference in refractive index must be used or the number of layers must be significantly increased. However, the refractive indices of even the polymers with a large difference in refractive index have limitations in lamination, and the increase in the number of layers has technical limitations. Therefore, to reflect light of such a wider wavelength range, there has heretofore been no choice but relying on a method such as lamination of several laminated films.

Further, the films described in the above two publications contain no lubricants in a surface layer so as to improve an optical transmittance. Thus, they are difficult to handle such as winding up. This handling such as winding is not particularly a problem for a thick film. However, when a thin film is to be formed, the film becomes very difficult to wind up and impossible to handle.

Meanwhile, in recent years, in the field of image devices typified by a color television, in response to market demands for higher resolution of a projected image and a larger screen, a light-emitting panel type television using a plasma display or the like, a non-light-emitting panel type television using a liquid crystal display or the like, a rear projection type television incorporating an image projector, and other types of televisions are on their way to the market, in addition to a conventional direct view type television using a CRT. Particularly, the light-emitting panel type plasma display emits light which does not belong to the wavelength ranges of three primary colors (red, green and blue) of a color image over the visible range and the infrared range due to the structure of each picture element constituting a light source or discharge unit. For example, emission of strong near infrared light is measured around a wavelength of around 820, 880 and 980 nm. The emission of the near infrared light causes problems such as malfunctions in peripheral devices. This is because the wavelength of the emitted near infrared light matches the operation wavelength of near infrared light used in near infrared communication devices such as remote controllers for a television, a video and an air conditioner, portable communication devices, and personal computers.

JP-A 10-156991 proposes an external light antireflective film which has an effect of preventing the above malfunctions in peripheral devices caused by near infrared light and an external light antireflection effect and can also be suitably used for a front panel of an image display device. However, its effect of preventing the malfunctions in peripheral devices caused by near infrared light is achieved by a layer of an expensive near infrared absorber, and the external light antireflective film is colored by the near infrared absorber, so that the film is liable to have a low light transmittance within a visible range. Further, to conform to near infrared light of various wavelengths emitted from the plasma display, various types of near infrared absorbers must be added, and it is not possible to control wavelengths of light to be absorbed easily.

EP-A-0735962 describes a film reflecting near-IR radiation which comprises a multilayer film comprising greater than 11 layers of alternating polyester based on ethylene-2, 6-naphthalene dicarboxylate and thermoplastic resin of lower refractive index. The layers have a thickness of less than 0.5$\mu$m, at least one of the two sets of layers varies in thickness, the thickest layer being at least 1.2 times thicker than the thinnest. Additionally, one of the two polymer layers is oriented.

WO-A-96/19347 and WO-A-97/01778 describe very similar films to those described in EP-A-0735952 with the additional feature that the layer thickness varies across the stack by a factor of at least 1.2.

JP-A-2000 141567 describes a multilayered laminated stretched polyester film comprising layers (A) comprising polyethylene-2, 6-naphthalate containing 0.001 to 0.5wt% of inert particles with a mean particle size of 0.01 to 2$\mu$m and layers (B) comprising copolyethylene terephthalate. The thickness of one of the layers is 0.5 to 0.3$\mu$m.

In view of the above problems, a near infrared light blocking film for a front panel of plasma display which is capable of cutting wavelengths ranging from about 800 nm to about 1,000 nm evenly has been desired.

Disclosure of the invention

An object of the present invention is to provide a near infrared light reflecting film which can be used for a front panel of a plasma display using a multilayer film which can reflect light of given wavelength range selectively and widely and which is free from the above problems of the prior art.

Still another object of the present invention is to provide a near infrared light reflecting film for a front panel of plasma display which prevents malfunctions in peripheral devices that are caused by near infrared light radiated from a display surface of a plasma display, is inexpensive, has a high light transmittance, and can conform to prevention of radiation of broadband near infrared light.

Other objects and advantages of the present invention will be apparent from the following description.

According to the present invention, firstly, the above objects and advantages of the present invention are achieved by a near infrared light reflecting film for a front panel of a plasma display, which comprises a multilayer film, said multilayer film comprising a first layer consisting essentially of a polyester containing ethylene-2,6-naphthalene dicarboxylate as a main recurring unit and a second layer consisting essentially of a thermoplastic resin having a lower refractive index than the refractive index of the polyester, wherein:

the first and second layers each have a thickness of 0.05 to 0.5 $\mu$m and are laminated alternately so as to form a laminate comprising at least 11 layers,
at least either the first layers or the second layers differ in thickness,
a layer with a maximum thickness is at least 1.2 times as thick as a layer with a minimum thickness, and
at least either the first layers or the second layers are oriented at least in one direction.

According to the present invention, secondly, the above objects and advantages of the present invention are achieved by method for using the same multiplayer film as above for a front panel of a plasma display as a near infrared light reflecting film.

Preferred Embodiment of the Invention

A multilayer film in the present invention is formed by laminating a first layer comprising a polymer having a high refractive index and a second layer comprising a polymer having a lower refractive index than that of the first layer alternately.

The polyester constituting the first layer and containing ethylene-2,6-naphthalene dicarboxylate as a main recurring unit is a polyethylene-2,6-naphthalene dicarboxylate homopolymer or a copolymer in which ethylene-2,6-naphthalene dicarboxylate constitutes at least 85 mol%, preferably at least 98 mol% of all recurring units. Particularly preferred is the polyethylene-2,6-naphthalene dicarboxylate homopolymer. Use of these polyesters has such an advantage that the first layer has a high refractive index through stretching.

Illustrative examples of a dicarboxylic acid component as a copolymerizable component constituting the above copolymer include aromatic dicarboxylic acids other than 2,6-naphthalenedicarboxylic acid such as terephthalic acid, isophthalic acid and 2,7-naphthalenedicarboxylic acid; aliphatic dicarboxylic acids such as adipic acid, azelaic acid, sebacic acid and decanedicarboxylic acid; and alicyclic dicarboxylic acids such as cyclohexanedicarboxylic acid. Illustrative examples of a glycol component as a copolymerizable component constituting the above copolymer include aliphatic diols such as butanediol and hexanediol; and alicyclic diols such as cyclohexanedimethanol.

A thermoplastic resin constituting the second layer must have a lower refractive index than that of the polyester constituting the first layer. Its refractive index is preferably lower than that of the polyester constituting the first layer by at least 0.005, more preferably at least 0.02. Preferred examples of such a thermoplastic resin include the following three resins (1) to (3), i.e.,

(1) a mixture of a polyethylene-2,6-naphthalene dicarboxylate and a polyethylene terephthalate or an ethylene terephthalate/ethylene isophthalate copolymer,
(2) a syndiotactic polystyrene, and
(3) a copolyester having a melting point of 210 to 245°C.

In the above case of (1) where the polymer constituting the second layer is the mixture of a polyethylene-2,6-naphthalene dicarboxylate and a polyethylene terephthalate or an ethylene terephthalate/ethylene isophthalate copolymer, since the refractive index can be adjusted by changing the mixing ratio between the polyethylene terephthalate and the polyethylene-2,6-naphthalene dicarboxylate or the copolymer, there is no need to prepare polymers especially for adjusting reflectivity. In other words, the above case (1) has such an advantage that the reflectivity of a multilayer film can be varied easily by adjusting the mixing ratio in the mixture. Further, when the polymer of the second layer is a copolymer, the second layer has low crystallinity, so that special equipment such as an extruder or a dryer may be required at the time of extrusion of the polymer in a molten state. However, in the above case (1), since the polymer constituting the second layer is a mixture, it undergoes a small decrease in crystallinity, thereby giving another advantage that the above case (1) does not require the above special equipment.

The mixing ratio between the polyethylene-2,6-naphthalene dicarboxylate and the polyethylene terephthalate or the ethylene terephthalate/ethylene isophthalate copolymer is preferably 5:95 to 95:5, particularly preferably 20:80 to 80:20, in terms of weight ratio. When the content of the polyethylene terephthalate or copolymer is lower than 5 wt% or the content of the polyethylene-2,6-naphthalene dicarboxylate is higher than 95 wt%, a difference in refractive index between the first and second layers becomes insufficient, while when the content of the polyethylene terephthalate or copolymer is higher than 95 wt% or the content of the polyethylene-2,6-naphthalene dicarboxylate is lower than 5 wt%, a difference in melt viscosity between the first and second layers becomes excessively large, so that it becomes difficult to maintain lamination of the multilayer film.

The polyethylene-2,6-naphthalene dicarboxylate in the above mixture is preferably, for example, a polyethylene-2,6-naphthalene dicarboxylate homopolymer or a copolymer in which ethylene-2,6-naphthalene dicarboxylate constitutes at least 80 mol%, preferably at least 90 mol% of all recurring units. Of these, the above homopolymer is preferred. Illustrative examples of a dicarboxylic acid component as a copolymerizable component constituting the above copolymer include other aromatic dicarboxylic acids such as terephthalic acid, isophthalic acid and 2,7-naphthalenedicarboxylic acid; aliphatic dicarboxylic acids such as adipic acid, azelaic acid, sebacic acid and decanedicarboxylic acid; and alicyclic dicarboxylic acids such as cyclohexanedicarboxylic acid. Illustrative examples of a glycol component as a copolymerizable component constituting the above copolymer include aliphatic diols such as butanediol and hexanediol; and alicyclic diols such as cyclohexanedimethanol.

Further, the polyethylene terephthalate in the above mixture is preferably, for example, a polyethylene terephthalate homopolymer or a copolymer in which ethylene terephthalate constitutes at least 80 mol%, preferably at least 90 mol% of all recurring units. Of these, the above homopolymer is preferred. Illustrative examples of a dicarboxylic acid component as a copolymerizable component constituting the above copolymer include other aromatic dicarboxylic acids such as isophthalic acid and 2,7-naphthalenedicarboxylic acid; aliphatic dicarboxylic acids such as adipic acid, azelaic acid, sebacic acid and decanedicarboxylic acid; and alicyclic dicarboxylic acids such as cyclohexanedicarboxylic acid. Illustrative examples of a glycol component as a copolymerizable component constituting the above copolymer include aliphatic diols such as butanediol and hexanediol; and alicyclic diols such as cyclohexanedimethanol. Of these copolymers, the ethylene terephthalate/ethylene isophthalate copolymer is preferred.

Although the melting point of the mixture constituting the second layer becomes lower than the melting points of the polymers constituting the mixture, the second layer forms two melting point peaks derived from these polymers. Of these melting point peaks of the mixture constituting the second layer, the peak temperature of a higher melting point peak is preferably within a range of 220 to 265°C, more preferably 240 to 260°C. Further, a difference in temperature between the melting point of the polymer constituting the first layer and the higher melting point peak of the mixture constituting the second layer is preferably at least 10°C, more preferably at least 20°C. When the difference in melting point is at least 10°C, a difference in orientation by heat treatment is liable to be expanded, thereby making it easy to make a distinct difference in refractive index.

Further, a stretched film is preferably heat-treated (heat-set) for thermal stabilization. When the mixture of the polyethylene-2,6-naphthalene dicarboxylate and the polyethylene terephthalate is used as the polymer constituting the second layer, the heat treatment is preferably carried out at (Tm - 60)°C to (Tm - 10)°C with respect to the melting point (Tm) of the polymer of the first layer.

Next, a description will be given to the above case (2) where the polymer constituting the second layer is a syndiotactic polystyrene. The syndiotactic polystyrene is a polystyrene having a syndiotactic structure, i.e., a stereo structure in which a phenyl group and a substituted phenyl group as side chains are positioned alternately on opposite sides of a principal chain formed by carbon-carbon bonds, and its tacticity is quantified by a nuclear magnetic resonance method based on isotopic carbons. The tacticity measured by this method can be expressed by the proportion of successive constitutional units, for example, a diad for two successive constitutional units, a triad for three successive constitutional units, and a pentad for five successive constitutional units. The syndiotactic polystyrene in the present invention may be a polystyrene, polyalkylstyrene, polyhalogenated styrene, polyalkoxystyrene or polyvinylbenzoic acid that generally has a syndiotacticity of not lower than 75%, preferably not lower than 85%, in terms of racemic diad or a syndiotacticity of not lower than 30%, preferably not lower than 50%, in terms of racemic pentad, or a hydrogenated polymer thereof and a copolymer thereof. Of these, preferred syndiotactic polystyrenes are those having a melting point of 220 to 270° C. More preferred syndiotactic polystyrenes are those having a melting point of 240 to 270° C. Further, as the syndiotactic polystyrene, a copolymer can be used, and a copolymer with p-methyl styrene is preferred. The melting point of a homosyndiotactic polystyrene is 270° C. To have the melting point of the copolymer within the above range, the amount of p-methyl styrene to be copolymerized needs to be adjusted. When the amount of p-methyl styrene to be copolymerized is large, the melting point lowers and crystallinity also lowers. The amount of p-methyl styrene to be copolymerized is preferably 0 to 20 mol%. When the melting point is lower than 220°C, the crystallinity of the syndiotactic polystyrene becomes too low, film formation becomes difficult, and heat resistance (change in dimension when subjected to heat treatment) also deteriorates. The second layer comprising the syndiotactic polystyrene may contain inert particles in such an amount that does not impair optical properties. However, it is preferred that no inert particles be substantially contained. An atactic polystyrene and an isotactic polystyrene are not preferred because they have low crystallinity, are difficult to form into a film, and have poor heat resistance due to the absence of a crystal structure or the presence of a loose crystal structure.

The refractive index in a stretch direction of the polyethylene-2,6-naphthalene dicarboxylate can be increased by stretching, whereas the refractive index in a stretch direction of the syndiotactic polystyrene is hardly increased since it shows negative optical anisotropy. Hence, a difference in refractive index between the layers can be increased by stretching.

A difference in melting point between the first layer comprising the polyethylene-2,6-naphthalene dicarboxylate and the second layer comprising the syndiotactic polystyrene is preferably within 30°C. When the difference becomes larger than 30°C, peeling may occur between the layers when they are molten, laminated, solidified and formed into an unstretched sheet or peeling may also occur at the time of subsequent stretching disadvantageously.

A stretched film is preferably heat-treated (heat-set) for thermal stabilization. When the syndiotactic polystyrene is used as the polymer constituting the second layer, the heat treatment is preferably carried out at (Tm - 60)°C to (Tm - 10)°C with respect to the melting point (Tm) of the polymer of the first layer.

Next, a description will be given to the above case (3) where the polymer constituting the second layer is a copolyester having a melting point of 210 to 245°C. When the melting point of the copolyester is lower than 210°C, the crystallinity of the polymer becomes so low that film formation is difficult. In addition, the second layer has poor heat resistance which is liable to exert an adverse effect on the heat resistance of the whole multilayer film. Meanwhile, when the melting point of the copolyester is higher than 245° C, the crystallinity of the polymer increases, orientation crystallization at a relatively high stretch temperature with respect to the glass transition temperature (Tg) of the polymer proceeds, continuous film formability deteriorates, and adhesion to the first layer also lowers.

The melting point and Tg of the copolyester can be adjusted by selecting the type and amount of copolymerizable component and adjusting the amount of the copolymerizable component. Preferable examples of the copolyester include a copolyester containing ethylene terephthalate as a main recurring unit and a copolyester containing ethylene-2,6-naphthalene dicarboxylate as a main recurring unit. The copolymerizable component may be a dicarboxylic acid component or a glycol component. Illustrative examples of the dicarboxylic acid component include aromatic dicarboxylic acids such as isophthalic acid, phthalic acid and naphthalenedicarboxylic acid; aliphatic dicarboxylic acids such as adipic acid, azelaic acid, sebacic acid and decanedicarboxylic acid; and alicyclic dicarboxylic acids such as cyclohexanedicarboxylic acid. Illustrative examples of the glycol component include aliphatic diols such as butanediol and hexanediol; and alicyclic diols such as cyclohexanedimethanol. These copolymerizable components can be used alone or in combination of two or more. As the copolyester, a polyester comprising ethylene-2,6-naphthalene dicarboxylate as a main recurring unit and ethylene isophthalate as a subordinate recurring unit and a polyester comprising ethylene terephthalate as a main recurring unit and ethylene-2,6-naphthalene dicarboxylate as a subordinate recurring unit are preferred.

The proportion of the above subordinate recurring unit is preferably 4 to 18 mol%, more preferably 8 to 15 mol% of all recurring units in the polyester. Although the second layer preferably contains substantially no inert particles, the second layer may contain the inert particles in such an amount that does not impair optical properties.

The intrinsic viscosity (orthochlorophenol, 35˚C) of the copolyester is preferably 0.45 to 0.8, more preferably 0.5 to 0.7.

In the present invention, a difference in glass transition point (Tg) between the first and second layers of the multilayer film is 40˚ C or higher. With the difference within the above range, when the film is stretched at a temperature consistent with the Tg of the first layer, the temperature is an excessively high stretch temperature for the polymer of the second layer, orientation of the second layer by stretching is suppressed, almost like flowing (flow stretching). Thus, while the polymer of the first layer is oriented by stretching and its refractive index increases, the orientation of the polymer of the second layer is suppressed, whereby a difference in refractive index between the layers becomes larger. When the difference in Tg is lower than 40˚C, a difference between the stretch temperature consistent with the polymer of the first layer and the Tg of the polymer of the second layer becomes small, and the difference in refractive index between the first and second layers after stretching is liable to be insufficient.

Further, the stretched film is preferably heat-treated (heat-set) for thermal stabilization. When the copolyester having a melting point of 210 to 245˚ C is used as the polymer constituting the second layer, the heat treatment is preferably carried out at a temperature higher than (the melting point of the polymer of the second layer - 30)˚C and lower than (the melting point of the polymer of the first layer - 30)˚C with respect to the melting point (Tm) of the polymer of the first layer.

To improve the windability of the film, at least one of the polymers constituting the first and second layers in the present invention contains inert particles having an average particle diameter of preferably 0.01 $\mu$m to 2 $\mu$m, more preferably 0.05 $\mu$m to 1 $\mu$m, most preferably 0.1 $\mu$m to 0.3 $\mu$m, in an amount of preferably 0.001 wt% to 0.5 wt%, more preferably 0.005 wt% to 0.2 wt%. When the average particle diameter of the inert particles is smaller than 0.01 $\mu$m or the content of the inert particles is lower than 0.001 wt%, an improvement in the windability of the film is liable to be insufficient, while when the average particle diameter of the inert particles is larger than 2 $\mu$m or the content of the inert particles is higher than 0.5 wt%, deterioration in optical properties caused by the particles is liable to be noticeable, and the light transmittance of the whole film may lower. The light transmittance is not lower than 70%. When it is lower than 70%, the performance of the film is insufficient for optical applications.

Illustrative examples of such inert particles include inorganic inert particles such as silica, alumina, calcium carbonate, calcium phosphate, kaolin and talc, and organic inert particles such as a silicone, crosslinked polystyrene and styrene-divinylbenzene copolymer. The above inert particle is preferably a spherical particle (hereinafter may be referred to as "spherical particle") having a ratio of long diameter/short diameter of 1.2 or less or even 1.1 or less so as to balance the slipperiness and optical properties of the film. Further, the inert particles preferably have a sharp granular variation. For example, those having a relative standard deviation of smaller than 0.3 are preferred, and those having a relative standard deviation of smaller than 0.2 are more preferred. Use of particles having a large relative standard deviation increases the frequency of occurrence of coarse particles, whereby optical defects are produced in some cases. The average particle diameter, particle diameter ratio and relative standard deviation of the inert particles are calculated by sputtering an extremely thin film of metal for imparting conductivity on the surfaces of the inert particles, determining the long diameter, short diameter and diameter equivalent to area circle of the particle by observing an image magnified by 10,000 to 30,000 times of the particles under an electron microscope, and inserting these into the following expressions.

$$\text{average particle diameter = total sum of diameters equivalent to area circle of measured particles/number of the measured particles}$$

$$\text{particle diameter ratio = average long diameter of particles/average short diameter of the particles}$$

It is preferable that use of particles which act as pigments such as titanium oxide and zinc sulfide, or colored particles as the above inert particles is avoided in as many chances as possible, because they degrade the optical properties. Particularly preferable, inert particles as described above are contained in the first layer but are not substantially contained in the second layer.

The lamination form of the first layers and the second layers in the present invention is such that the first layer and the second layer are laminated alternately to a total of at least 11 layers, preferably at least 31 layers, more preferably at least 41 layers. When the number of laminated layers is less than 11, selective reflection by multiple interference is so small that satisfactory reflectance cannot be obtained. An upper limit for the number of laminated layers is preferably as many as 301 layers from the viewpoints of productivity and the like.

Further, when the multilayer film of the present invention has the second layer as one of side layers, the following problems may occur, because the glass transition point of the polymer forming the first layer is generally higher than that of the polymer forming the second layer. That is, when the film is to be heated by a roller or the like to be stretched, it becomes difficult to heat the film to the stretch temperature required to stretch the first layer, and when the film is to be heat-set, the temperature of the film cannot be increased so as to prevent fusion of the exposed second layer from occurring, resulting in insufficient thermal stability. On the contrary, when the multilayer film has the first layer as both side layers, the thermally unstable second layers are present as internal layers, so that the multilayer film can be produced at adequate stretch temperatures and heat-setting temperatures. The multilayer film in the present invention preferably has the first layer as both side layers. The side layers in the present invention are outermost layers in a direction perpendicular to the surface direction of the multilayer film.

Further, the thickness of each of the first and second layers is 0.05 to 0.5 $\mu$m, preferably 0.05 to 0.3 $\mu$m. The thickness of the above range is a thickness required to selectively reflect light by the optical interference between the layers.

In the multilayer film in the present invention, either the first layer or the second layer, preferably both the first layer and the second layer, must have a ratio of a maximum thickness/a minimum thickness of at least 1.2, preferably at least 1.3, more preferably at least 1.5, much more preferably at least 1.8. Thereby, the multilayer film of the present invention can achieve selective reflection of light of wide wavelength range which cannot be achieved by a conventional multilayer film comprising layers having a uniform thickness. Further, an upper limit for the ratio of the maximum thickness/the minimum thickness is preferably as high as 3. When the ratio exceeds 3, the wavelength range of reflected light becomes so wide that sufficient reflectance is hardly obtained.

Specific examples of the multilayer film in the present invention include a multilayer film in which at least either the first layers or the second layers, preferably both layers, comprise at least two groups of layers having the same thickness and layers in between the groups of layers differ in thickness, and a multilayer film in which at least either the first layers or the second layers, preferably both layers, comprise a plurality of layers whose thicknesses gradually decrease or increase in one lamination direction. Changing the thickness of the first or second layer randomly weakens interference in the layers.

The former multilayer film of the above specific examples has at least two thickness peaks which can be clearly distinguished as seen from its thickness distribution curve. The thickness peaks which can be clearly distinguished refer to two thickness peaks having a valley whose level is at most a half of the levels of both peaks therebetween when a distribution curve is plotted based on a thickness range of 0 to 1 $\mu$m divided into 100 portions.

Of the above specific examples, the latter multilayer film is preferred.

Further, in the near infrared light reflecting film of the present invention, a plurality of multilayer films which selectively reflect light of different wavelengths are used in combination so as to expand the range of wavelength of light that the near infrared light reflecting film of the present invention selectively reflects. To combine the multilayer films to form the near infrared light reflecting film, the multilayer films which selectively reflect light of different wavelengths may be laminated at the time of film formation without applying an adhesive or the like to between them or laminated by use of an adhesive or the like after formation of the plurality of multilayer films. To simplify the process and prevent degradation in the effect of interference of light due to the presence of an adhesive or the like, it is preferred that the multilayer films which selectively reflect light of different wavelengths may be laminated at the time of film formation without applying an adhesive or the like to between them. Further, as long as the objects of the present invention can be achieved, a near infrared absorber which absorbs light of specific wavelengths may be contained in the multilayer films or a transparent film which contains a near infrared absorber may be laminated on and used in combination with the multilayer films.

The near infrared light reflecting film of the present invention is at least monoaxially, preferably biaxially stretched. The film is preferably stretched at a temperature between the glass transition point (Tg) of the resin for the first layer and (Tg + 50)˚C. For monoaxial stretching, the stretch ratio is preferably 2 to 10 times, and the direction of stretch may be a longitudinal or transverse direction. For biaxial stretching, the area ratio is preferably 5 to 25 times. As the stretch ratio becomes larger, variations in the thicknesses of the first and second layers in each surface direction become absolutely smaller due to a decrease in the thicknesses of the layers by stretching, so that interferences of light in a surface direction in the multilayer films become uniform advantageously. As a stretching method, a known stretching method such as sequential biaxial stretching, simultaneous biaxial stretching, tubular stretching or inflation stretching can be used. Sequential biaxial stretching is preferred since it is advantageous in terms of productivity and quality. Further, the stretched film is preferably stabilized by heat treatment for thermal stabilization. The temperature for the heat treatment is preferably higher than (the melting point of the second layer - 30)˚ C and lower than (the melting point of the first layer - 30)°C. However, when the heat treatment temperature is too high, fusion of the second layer starts, resulting in an increase in non-uniformity in thickness and deterioration in continuous film formability.

To form the multilayer film in the present invention, for example, a polymer forming a first layer composed essentially of a polyethylene-2,6-naphthalene dicarboxylate containing inert particles and a polymer forming a second layer are laminated alternately by a simultaneous multilayer extrusion method using a feed block preferably such that both outermost layers would be the first layers, and the laminated polymers are then released into a die. At this time, the polymers laminated in the feed block retain its lamination, and by adjusting the thicknesses of the laminated layers in the feed block, changing of the thicknesses such as a phased changing, a gradual decrease or increase in the thicknesses of the first or second layers can be achieved. A sheet extruded from the die is cooled and solidified on a casting drum, thereby forming into an unstretched film. The unstretched film is heated to a given temperature, stretched in a longitudinal direction and/or a transverse direction, heat-treated at a given temperature, and then wound up.

The multilayer film in the present invention may be used in the form of a laminate with other transparent resin film, antireflective film, thin metal film, hard coat layer or other multilayer laminated stretched film having different reflectance, so as to adjust its thickness and improve its handling properties. The other transparent resin film is defined as a material whose loss in the quantity of light due to scattering or diffusion of light is small and which has a haze measured in accordance with JIS K-7105 of not higher than 10%. The higher refractive index the transparent resin film has, the more advantageous it is. Preferable examples of the transparent resin film include a polyester such as a polyethylene terephthalate or a polyethylene-2,6-naphthalate, a polycarbonate, a triacetyl cellulose, a polymethyl methacrylate, a polystyrene, and a polyvinyl chloride. The thickness of the transparent resin film is preferably 25 to 200 $\mu$m, more preferably 50 to 150 $\mu$m. When the thickness of the transparent resin film is smaller than 25 $\mu$m, its strength is insufficient, while when it is larger than 200 $\mu$m, the rigidity of the film becomes so high that the film has poor secondary processability to the surface of a display of an image device disadvantageously. Further, as a lamination method, coextrusion at the time of extrusion or lamination using an adhesive is used, for example. Lamination is conducted on one or both surfaces of the transparent resin film.

Further, to laminate the near infrared light reflecting film of the present invention on the front panel of a plasma display, the reflecting film is desirably in the form of a laminate in which an antireflective film is formed on one surface of a transparent resin film and the multilayer laminated stretched film is laminated on the other surface of the transparent resin film. In the present invention, a method of forming the antireflective layer is not particularly limited, and any processing method can be selected. As the method of forming the antireflective layer, a method of reflecting external light irregularly thereby reducing luminous reflectance, e.g., a method of forming an antireflective film which reflects light irregularly by applying superfine particles of, for example, silicon dioxide having particle diameters which are not larger than the wavelengths of visible light on one surface of the above transparent resin film, a method of forming an antireflective layer by forming a cured film on one surface of the transparent resin film and forming a magnesium fluoride layer on the cured film by a vapor deposition method, or a method of forming a thin, refractive index film on one or both surfaces of the transparent resin film is known, and these methods can be employed as appropriate. Of these, the method of forming a thin, refractive index layer so as to reduce reflectance by interference of light reflected on the surface of the thin layer and refracted reflected light at the interface is easy to use and effective. That is, when a thin film having a lower refractive index layer than that of a base material of the transparent resin film and having a thickness equal to 1/4 of the wavelength of visible light is formed on outermost layers of the transparent resin film as an antireflective film, surfacial reflection is reduced by an interference effect that light reflected at its top surface and light reflected at its bottom surface cancel each other. The refractive index of the thin film as an antireflective layer is preferably lower than the refractive index of the transparent resin film, and an amorphous transparent fluorine-containing polymer is preferred as the thin film. A thin antireflective layer comprising an amorphous transparent fluorine-containing polymer is obtained by forming a transparent fluorine-containing polymer having a refractive index of 1.28 to 1.44 into a layer having a thickness of 0.05 to 0.25 $\mu$m. The thin antireflective layer preferably has a total light reflectance of lower than 7%. As a low-refractive-index transparent resin using such an amorphous transparent fluorine-containing polymer as an antireflective layer, polymers soluble in specific fluorine-based solvents such as perfluoctane, $CF_3(CF_2)nCH=CH_2$ (n: 5 to 11) and $CF_3(CF_2)mCH_2CH_3$ (m: 5 to 11), fluorine-containing alkyl acrylate polymers, fluorine-containing alkyl methacrylate polymers, a trade name "CYTOP" (product of Asahi Glass Company), and a trade name "Teflon AF" (product of Du Pont Co., Ltd.) are known. These are coated on the transparent resin film by means of spray coating, spin coating, dip coating, roller coating, gravure coating, die coating or the like. These coating methods can be used in continuous processing and are excellent in productivity as compared with a vapor deposition method which is a batch type. Further, to improve adhesion of the antireflective layer to the transparent resin film, a corona discharge treatment, an active energy radiation treatment such as an ultraviolet radiation treatment or a primer treatment may be carried out. In addition, a near infrared light reflecting film having an antistatic layer between the transparent resin film and the antireflective film is more suitably used for a display. That is, it is desirable that the value of surfacial resistance of a transparent conductive agent layer obtained by use of a metal oxide such as tin oxide or a surfactant as an antistatic agent be not larger than $10^{10}$ $\Omega$.

Examples

Hereinafter, the present invention will be described with reference to Examples. Physical properties in Examples were measured in accordance with the following method.

(1) Melting Point and Glass Transition Point (Tg) of Polyester

20 mg of polyester chips were sampled, and the glass transition point and melting point of the polyester were measured at a temperature increasing rate of 20°C/min by use of DSC (DSC2920) of TA Instruments Co., Ltd.

(2) Thicknesses of First and Second Layers (Maximum Thickness and Minimum Thickness)

A sample was cut out in the form of a triangle, secured in an embedding capsule, and then embedded by an epoxy resin. Then, the embedded sample was cut in a direction parallel to a longitudinal direction by means of a microtome (ULTRACUT-S) so as to cut a thin film piece having a thickness of 50 nm out of the sample, the thin piece was observed and photographed at an acceleration voltage of 100 kv by use of a transmission electron microscope, and the thicknesses of first and second layers were determined from the photograph so as to determine the maximum and minimum thicknesses of the first and second layers.

(3) Reflectance

By use of a spectrophotometer MPC-3100 of Shimadzu Corporation, a relative mirror reflectance with respect to an aluminium-evaporated mirror was measured at wavelengths of 350 nm to 2,100 nm. The highest reflectance among the measured reflectances was taken as a maximum reflectance. Further, when a number of wavelengths showed the maximum reflectance, a peak wavelength was not determined.

(4) Peak Half Value Width Wavelength

A measurement was carried out in the same manner as in measurement of a maximum reflectance, and the values of shorter and longer wavelengths corresponding to the half widths of the maximum reflectance were taken as shorter and longer peak half value width wavelengths, respectively.

(5) Total Light Transmittance

As in the case of reflectance, a light transmittance was measured at wavelengths of 350 nm to 2,100 nm by use of a spectrophotometer MPC-3100 of Shimadzu Corporation. Of the measured light transmittances, an average of light transmittances of a visible range (450 nm to 700 nm) was taken as a total light transmittance.

(6) Windability

The windability of a formed film was ranked based on the following criteria.
◎: The film can be wound without problems.
○: The film can be wound by adjusting conditions, e.g., decreasing the winding speed.
Δ: The film can be somehow wound but has lumps and wrinkles.
✕: The film cannot be wound due to the occurrence of many lumps and wrinkles even by adjusting conditions.

(7) Near Infrared Light Blocking Capability

A multilayer film obtained was set at a light-receptive spot from a remote controller of a household television, and it was tested whether the television responded to remote control signals (having a wavelength of 950 to 850 nm) when one sends the remote control signal to the television 2 m away from the television by use of the remote controller. Since near infrared light emitted from a PDP display is weaker than near infrared light emitted from the remote controller, the occurrence of malfunctions caused by the remote controller can be prevented if no responses are observed in the test. Multilayer films which did not respond to the remote controller were rated as "○", and those which responded to the remote controller were rated as "✕".

Example 1

A polyethylene-2,6-naphthalene dicarboxylate (PEN) having an intrinsic viscosity (orthochlorophenol, 35˚C) of 0.62 and a polyethylene terephthalate (PET) having an intrinsic viscosity (orthochlorophenol, 35˚C) of 0.63 were prepared. Then, a resin for a first layer was prepared by adding 0.11 wt% of spherical silica particles (average particle diameter: 0.12 μm, long diameter/short diameter ratio: 1.02, mean deviation of particle diameter: 0.1) to PEN, and a resin for a second layer was prepared by mixing PEN containing no inert particles with PET in a weight ratio of 50:50. After the resin for the first layer was dried at 160˚C for 3 hours and the mixed resin for the second layer was dried at 160˚C for 3 hours, the resins were fed to an extruder and molten. After the polymers for the first and second layers were divided into 31 layers and 30 layers, respectively, the first layer and the second layer were laminated alternately by use of a multilayer feed block device having slits which gradually increase in width. Then, the laminated layers were lead to a die and then cast on a casting drum so as to prepare a laminated unstretched sheet in which the first layer and the second layer were laminated alternately for a total of 61 layers with the thicknesses of the layers gradually changing. The extrusion ratio of the first layer to the second layer was controlled to be 1:0.8, and they were laminated such that both outermost layers would be the first layers. The laminated unstretched sheet was stretched to 3.5 times in a longitudinal direction at 150˚ C, stretched to 5.5 times in a transverse direction at 155˚C, and then heat-set at 230˚C for 3 seconds. Production conditions are shown in Table 1, and the physical properties of the obtained multilayer laminated stretched film are shown in Table 2.

Examples 2 to 8 and Comparative Examples 1 to 4

The procedure of Example 1 was repeated except that the production conditions were changed as shown in Table 1. Physical properties obtained are shown in Table 2.

Table 1

| | First Layer | | | | Second Layer | | |
|---|---|---|---|---|---|---|---|
| | Number of Layers | Slit Width Maximum/Minimum | Kind of Resin | Inert Particles (Amount Added) | Number of Layers | Slit Width Maximum/Minimum | Kind of Resin |
| | - | - | - | - (wt%) | - | - | - |
| Ex.1 | 31 | 1.5 | PEN | A (0.11) | 30 | 1.5 | H |
| Ex.2 | 51 | 2.0 | PEN | C (0.15) | 50 | 2.0 | H |
| Ex.3 | 151 | 2.0 | PEN | A (0.11) | 150 | 2.0 | H |
| Ex.4 | 31 | 1.5 | PEN | A (0.11) | 30 | 1.5 | I |
| Ex.5 | 31 | 1.5 | PEN | A (0.11) | 30 | 1.5 | J |
| Ex.6 | 31 | 1.5 | PEN | Not Used | 30 | 1.5 | H |
| Ex.7 | 31 | 1.5 | PEN | B (0.01) | 30 | 1.5 | I |
| Ex.8 | 51 | 1.5 | PEN | A (0.11) | 50 | 2.0 | J |
| C.Ex.1 | 51 | 1.0 | PEN | Not Used | 50 | 1.0 | H |
| C.Ex.2 | 101 | 1.0 | PEN | Not Used | 100 | 1.0 | H |
| C.Ex.3 | 51 | 1.0 | PEN | Not Used | 50 | 1.0 | H |
| C.Ex.4 | 51 | 1.0 | PEN | Not Used | 50 | 1.0 | K |

Ex.: Example, C.Ex.: Comparative Example

EP 1 350 618 B1

Table 1 (continued)

| | Stretch Conditions | | | | Heat-Setting Temperature |
| | Longitudinal Stretching | | Transverse Stretching | | |
| | Temperature | Ratio | Temperature | Ratio | |
| | °C | - | °C | - | °C |
| Ex.1 | 150 | 3.5 | 155 | 5.5 | 230 |
| Ex.2 | 150 | 3.5 | 155 | 5.5 | 230 |
| Ex.3 | 150 | 3.5 | 155 | 5.5 | 230 |
| Ex.4 | 150 | 3.5 | 155 | 5.5 | 230 |
| Ex.5 | 150 | 3.5 | 155 | 5.5 | 230 |
| Ex.6 | 150 | 3.5 | 155 | 5.5 | 230 |
| Ex.7 | 150 | 3.5 | 155 | 5.5 | 230 |
| Ex.8 | - | - | 140 | 5 | 230 |
| C.Ex.1 | 150 | 3.5 | 155 | 5.5 | 230 |
| C.Ex.2 | 150 | 3.5 | 155 | 5.5 | 230 |
| C.Ex.3 | 150 | 3.5 | 155 | 4 | 230 |
| C.Ex.4 | 150 | 3.5 | 155 | 4.5 | 230 |

Ex.: Example, C.Ex.: Comparative Example

## Table 2

| | First Layer | | | Second Layer | | |
|---|---|---|---|---|---|---|
| | Melting Point | Maximum Thickness | Minimum Thickness | Melting Point | Maximum Thickness | Minimum Thickness |
| | ° C | µm | µm | ° C | µm | µm |
| Ex.1 | 269 | 0.14 | 0.07 | 254 | 0.11 | 0.06 |
| Ex.2 | 269 | 0.2 | 0.06 | 254 | 0.16 | 0.05 |
| Ex.3 | 269 | 0.2 | 0.06 | 254 | 0.16 | 0.05 |
| Ex.4 | 269 | 0.14 | 0.07 | 270 | 0.11 | 0.06 |
| Ex.5 | 269 | 0.14 | 0.07 | 244 | 0.11 | 0.06 |
| Ex.6 | 269 | 0.14 | 0.07 | 254 | 0.11 | 0.06 |
| Ex.7 | 269 | 0.14 | 0.07 | 254 | 0.11 | 0.06 |
| Ex.8 | 269 | 0.14 | 0.07 | 254 | 0.11 | 0.06 |
| C.Ex.1 | 269 | 0.14 | 0.13 | 254 | 0.11 | 0.1 |
| C.Ex.2 | 269 | 0.14 | 0.13 | 254 | 0.11 | 0.1 |
| C.Ex.3 | 269 | 0.14 | 0.13 | 254 | 0.11 | 0.1 |
| C.Ex.4 | 269 | 0.14 | 0.13 | 254 | 0.11 | 0.1 |

Ex.: Example, C.Ex.: Comparative Example

## Table 2 (continued)

| | Reflected Wavelength Width | | | Total Light Transmittance | Windability |
|---|---|---|---|---|---|
| | Peak Half Value Width Wavelength | | Maximum Reflectance | | |
| | Shorter Wavelength | Longer Wavelength | | | |
| | nm | nm | % | % | |
| Ex.1 | 410 | 620 | 46 | 48 | ◎ |
| Ex.2 | 380 | 850 | 38 | 52 | ◎ |
| Ex.3 | 370 | 865 | 68 | 22 | ◎ |
| Ex.4 | 410 | 620 | 54 | 36 | ◎ |
| Ex.5 | 410 | 620 | 52 | 38 | ◎ |
| Ex.6 | 410 | 620 | 46 | 50 | × |
| Ex.7 | 410 | 620 | 46 | 42 | ◎ |
| Ex.8 | 410 | 620 | 46 | 44 | ◎ |
| C.Ex.1 | 580 | 600 | 57 | 80 | × |
| C.Ex.2 | 575 | 605 | 78 | 77 | × |
| C.Ex.3 | 800 | 825 | 54 | 87 | × |
| C.Ex.4 | 710 | 720 | 55 | 85 | × |

Ex.: Example, C.Ex.: Comparative Example

EP 1 350 618 B1

The inert particles shown in Table 1 are as follows. Inert Particles A: spherical silica particles (average particle diameter: 0.12 $\mu$m, long diameter/short diameter ratio: 1.02, mean deviation of particle diameter: 0.1) Inert Particles B: massive calcium carbonate (average particle diameter: 0.01 $\mu$m, long diameter/short diameter ratio: 1.4, mean deviation of particle diameter: 0.25) Inert Particles C: spherical silicone (average particle diameter: 0.15 $\mu$m, long diameter/short diameter ratio: 1.1, mean deviation of particle diameter: 0.30)

Further, resins for the second layer which are shown in Table 1 are as follows.

Resin H: mixture of PEN containing no inert particles and PET in a weight ratio of 50:50

Resin I: syndiotactic polystyrene containing no inert particles

Resin J: PET copolymerized with 12 mol% of isophthalic acid and containing no inert particles

Resin K: PET containing no inert particles

Further, the highest melting point is shown in Table 2 when two or more melting point peaks exist.

It is understood from Tables 1 and 2 that the multilayer films of Examples 1 to 8 can selectively reflect light over a wide wavelength range of 200 nm or higher by varying the thicknesses of the first and second layers and have high reflectance in a given wavelength range by controlling the thicknesses and maximum thickness/minimum thickness ratios of the first and second layers. On the other hand, Comparative Examples 1 to 4 did not have a reflecting capability over a wide wavelength range because the first and second layers had a uniform thickness. Further, as can be seen in Examples, the obtained multilayer films of the present invention had excellent windability due to addition of the inert particles.

Example 9

A resin for a first layer was prepared by adding 0.1 wt% of spherical silica particles having an average particle diameter of 0.2 $\mu$m, a long diameter/short diameter ratio of 1.05 and a mean deviation of particle diameter of 0.15 to a polyethylene-2,6-naphthalene dicarboxylate (PEN), and a polyethylene terephthalate (IA12) copolymerized with 12 mol% of isophthalic acid and containing no inert particles was prepared as a resin for a second layer. The glass transition point (Tg) of the resin for the first layer was 121°C, and the glass transition point (Tg) of the resin for the second layer was 74°C. After dried at 170°C for 6 hours and then at 160°C for 3 hours, these resins were fed to an extruder and molten. After the polymers for the first and second layers were divided into 101 layers and 100 layers, respectively, the first layer and the second layer were laminated alternately by use of a multilayer feed block device having slits which gradually increase in width. Then, the laminated layers were lead to a die and cast on a casting drum so as to prepare a laminated unstretched sheet in which the first layer and the second layer were laminated alternately for a total of 201 layers with the thicknesses of the layers gradually changing. The extrusion ratio of the first layer to the second layer was controlled to be 1:0.8, and they were laminated such that both outermost layers would be the first layers. The laminated unstretched sheet was stretched to 3.5 times in a longitudinal direction at 150°C, stretched to 5.5 times in a transverse direction at 155°C, and then heat-set at 230°C for 3 seconds so as to obtain a reflecting film. It was confirmed that the obtained reflecting film had a total thickness of about 36 $\mu$m, the first layer had a maximum thickness of about 0.25 $\mu$m and a minimum thickness of about 0.18 $\mu$m, the second layer had a maximum thickness of about 0.16 $\mu$m and a minimum thickness of about 0.12 $\mu$m, and both the first layer and the second layer changed in thickness almost continuously. As for the optical properties of the obtained reflecting film, the reflecting film had a maximum reflectance of 96% and a visible light transmittance of 70% and showed a reflectance of at least 85% within a wavelength range of about 750 nm to 1,070 nm. Production conditions are shown in Tables 3 and 4, and the properties of the obtained reflecting film are shown in Table 5.

Example 10

The procedure of Example 9 was repeated except that the first layer and the second layer were divided into 41 layers and 40 layers, respectively, and that the total thickness of the film was changed to 14 $\mu$m. The first and second layers in the obtained reflecting film changed in thickness almost continuously. As for the optical properties of the reflecting film, the reflecting film had a maximum reflectance of 86% and a visible light transmittance of 78% and showed a reflectance of at least 85% within a wavelength range of about 840 nm to 980 nm. In a near infrared light blocking capability test, the reflecting film showed no problem at any wavelength. The blocking capability around 800 nm of the reflecting film was slightly weaker than that of the reflecting film of Example 9. The properties of the obtained reflecting film are shown in Table 5.

Examples 11 to 13

The procedure of Example 9 was repeated except that the resins for the first and second layers were changed to those shown in Tables 3 and 4 so as to obtain multilayer near infrared light reflecting films of Examples 11 to 13. The first and second layers in the obtained reflecting films changed in thickness almost continuously, and all the reflecting films showed a low transmittance with respect to a near infrared light of 800 nm to 950 nm and showed no problem in a near infrared light blocking capability test. The properties of the obtained reflecting films are shown in Table 5.

Comparative Example 5

The procedure of Example 9 was repeated except that only the same resin as that for the first layer in Example 9 was used to form a monolayer film having a thickness of 36 $\mu$m. The obtained reflecting film had neither a near infrared light reflecting capability nor a near infrared light absorbing capability. The properties of the reflecting film are shown in Table 5.

Comparative Examples 6 and 7

The procedure of Comparative Example 5 was repeated except that the thickness of the monolayer film was changed to 25 $\mu$m and 75 $\mu$m and 0.5 wt% of nickel complex type near infrared absorber (IRADDITIVE 200) of Dainippon Ink and Chemicals, Inc. is contained. The obtained monolayer film having a thickness of 25 $\mu$m had a poor near infrared light blocking rate, while the obtained monolayer film having a thickness of 75 $\mu$m had a satisfactory light blocking rate with respect to a wavelength of about 850 nm but had an unsatisfactory light blocking rate with respect to a wavelength of 950 nm. The properties of the monolayer films are shown in Table 5.

Table 3

| | | First Layer | | | | | |
| | Number of Layers | Kind of Resin | Melting Point | Tg | Inert Particles | | |
| | | | | | Kind | Particle Diameter | Amount Added |
| | | | | | | µm | wt% |
| | | | °C | °C | Spherical Silica | 0.2 | 0.1 |
| Ex.9 | 101 | PEN | 269 | 121 | Spherical Silica | 0.2 | 0.1 |
| Ex.10 | 41 | PEN | 269 | 121 | Spherical Silica | 0.2 | 0.1 |
| Ex.11 | 101 | PEN | 269 | 121 | Spherical Silica | 0.2 | 0.1 |
| Ex.12 | 101 | PEN | 269 | 121 | Spherical Silica | 0.2 | 0.1 |
| Ex.13 | 101 | IA18-PEN | 222 | 93 | Spherical Silica | 0.2 | 0.1 |
| C.Ex.5 | Single Layer | PEN | 269 | 121 | Spherical Silica | 0.2 | 0.1 |
| C.Ex.6 | Single Layer | PEN | 269 | 121 | Spherical Silica | 0.2 | 0.1 |
| C.Ex.7 | Single Layer | PEN | 269 | 121 | Spherical Silica | 0.2 | 0.1 |

Ex.: Example, C.Ex.: Comparative Example

EP 1 350 618 B1

## Table 3 (continued)

| | First Layer | | |
| --- | --- | --- | --- |
| | Maximum Thickness | Minimum Thickness | Amount of Near Infrared Absorbent |
| | µm | µm | wt% |
| Ex.9 | 0.25 | 0.18 | - |
| Ex.10 | 0.25 | 0.18 | - |
| Ex.11 | 0.25 | 0.18 | - |
| Ex.12 | 0.25 | 0.18 | - |
| Ex.13 | 0.25 | 0.18 | - |
| C.Ex.5 | - | - | - |
| C.Ex.6 | - | - | 0.5 |
| C.Ex.7 | - | - | 0.5 |

Ex.: Example, C.Ex.: Comparative Example

## Table 4

| | | Second Layer | | | | | Difference from Tg of Layer A | Total Thickness |
|---|---|---|---|---|---|---|---|---|
| | Number of Layers | Kind of Resin | Melting Point | Tg | Thickness | Thickness | | |
| | | | °C | °C | μm | μm | °C | μm |
| Ex.9 | 100 | IA12-PET | 269 | 74 | 0.25 | 0.18 | 47 | 36 |
| Ex.10 | 40 | IA12-PET | 269 | 74 | 0.25 | 0.18 | 47 | 14 |
| Ex.11 | 100 | sPS | 269 | 100 | 0.25 | 0.18 | 21 | 36 |
| Ex.12 | 100 | IA18-PET/IA15-PET | 269 | 93 | 0.25 | 0.18 | 28 | 36 |
| Ex.13 | 100 | IA12-PET | 269 | 74 | 0.25 | 0.18 | 19 | 36 |
| C.Ex.5 | - | - | - | - | - | - | - | 25 |
| C.Ex.6 | - | - | - | - | - | - | - | 25 |
| C.Ex.7 | - | - | - | - | - | - | - | 75 |

Ex.: Example, C.Ex.: Comparative Example

EP 1 350 618 B1

## Table 5

| | Total Light Transmittance | Light Transmittance at Various Wavelengths (%) | | | | | | | | | | | Near Infrared Light Blocking Capability | |
|---|---|---|---|---|---|---|---|---|---|---|---|---|---|---|
| | % | 400nm | 500nm | 600nm | 700nm | 800nm | 850nm | 900nm | 950nm | 1000nm | 1050nm | 1100nm | 850nm | 950nm |
| Ex.9 | 70 | 67 | 69 | 75 | 70 | 12 | 6 | 5 | 4 | 6 | 8 | 18 | ○ | ○ |
| Ex.10 | 78 | 69 | 71 | 74 | 73 | 45 | 15 | 15 | 15 | 14 | 14 | 45 | ○ | ○ |
| Ex.11 | 72 | 67 | 72 | 75 | 71 | 17 | 10 | 9 | 9 | 10 | 10 | 12 | ○ | ○ |
| Ex.12 | 71 | 67 | 71 | 74 | 68 | 25 | 14 | 12 | 12 | 11 | 10 | 10 | ○ | ○ |
| Ex.13 | 70 | 66 | 70 | 73 | 69 | 24 | 15 | 14 | 14 | 14 | 14 | 16 | ○ | ○ |
| C.Ex.5 | 88 | 87 | 87 | 88 | 88 | 89 | 89 | 89 | 89 | 89 | 89 | 89 | × | × |
| C.Ex.6 | 72 | 40 | 75 | 68 | 71 | 25 | 19 | 20 | 45 | 66 | 70 | 72 | × | × |
| C.Ex.7 | 62 | 38 | 72 | 65 | 68 | 20 | 8 | 15 | 33 | 62 | 68 | 70 | ○ | × |

Ex.: Example, C.Ex.: Comparative Example

EP 1 350 618 B1

## EP 1 350 618 B1

In Tables 3 and 4, PEN is a polyethylene-2,6-naphthalene dicarboxylate, IA18-PEN is a polyethylene-2,6-naphthalene dicarboxylate copolymerized with 18 mol% of isophthalic acid component based on all dicarboxylic acid components, IA12-PET is a polyethylene terephthalate copolymerized with 12 mol% of isophthalic acid component based on all dicarboxylic acid components, sPS is a syndiotactic polystyrene, and IA18-PEN/IA15-PET is a mixture of a polyethylene-2,6-naphthalene dicarboxylate copolymerized with 18 mol% of isophthalic acid component based on all dicarboxylic acid components and a polyethylene terephthalate copolymerized with 15 mol% of isophthalic acid based on all dicarboxylic acid components in a weight ratio of 50:50.

## Claims

1. A near infrared light reflecting film for a front panel of a plasma display, which comprises a multilayer film, said multilayer film comprising a first layer consisting essentially of a polyester containing ethylene-2,6-naphthalene dicarboxylate as a main recurring unit and a second layer consisting essentially of a thermoplastic resin having a lower refractive index than the refractive index of the polyester, wherein:

   the first and second layers each have a thickness of 0.05 to 0.3 μm and are laminated alternately so as to form a laminate comprising at least 11 layers,
   at least either the first layers or the second layers differ in thickness;
   a layer with a maximum thickness is at least 1.2 times as thick as a layer with a minimum thickness, and
   at least either the first layers or the second layers are oriented at least in one direction; and
   said multilayer film has a light transmittance of not lower than 70%.

2. The film of claim 1, wherein the thickest layer is at least 1.3 times as thick as the thinnest layer.

3. The film of any of claims 1 to 2, wherein at least either the first layers or the second layers comprise at least two groups of layers having the same thickness, and layers in between the groups of layers differ in thickness.

4. The film of any of claims 1 to 2, wherein at least either the first layers or the second layers comprise a plurality of layers whose thicknesses gradually decrease or increase in one lamination direction.

5. The film of any of claims 1 to 2, wherein both the first layers and the second layers comprise at least two groups of layers having the same thickness, and layers in between the groups of layers differ in thickness.

6. The film of any of claims 1 to 2, wherein both the first layers and the second layers comprise a plurality of layers whose thicknesses gradually decrease or increase in one lamination direction.

7. The film of any of claims 1 to 2, wherein at least either the first layer or the second layer contains 0.001 to 0.5 wt% of inert particles having an average particle diameter of 0.01 to 2 μm.

8. The film of claim 7, wherein the inert particles are at least one selected from the group consisting of silica, alumina, calcium carbonate, calcium phosphate, kaolin, talc, a silicone, a crosslinked polystyrene, and a styrene-divinylbenzene copolymer.

9. The film of claim 7, wherein the inert particle is an inert particle having a long diameter/short diameter ratio of as high as 1.2.

10. The film of claim 1, wherein the thermoplastic resin in the second layer is a polyester containing ethylene terephthalate as a main recurring unit and having a melting point of 210 to 245°C.

11. The film of claim 10, wherein the thermoplastic resin in the second layer contains ethylene-2,6-naphthalene dicarboxylate as a subordinate recurring unit.

12. The film of claim 1, wherein the thermoplastic resin in the second layer contains ethylene-2,6-naphthalene dicarboxylate as a main recurring unit and ethylene isophthalate as a subordinate recurring unit and has a melting point of 210 to 245°C.

13. The film of claim 1, wherein the thermoplastic resin in the second layer is a blend of a polyethylene-2,6-naphthalene dicarboxylate and a polyethylene terephthalate and a blend of a polyethylene-2,6-naphthalene dicarboxylate and an ethylene terephthalate/ethylene isophthalate copolymer.

14. The film of claim 1, wherein the thermoplastic resin in the second layer is a syndiotactic polystyrene having a melting point of 220 to 270˚C.

15. The film of claim 1, comprising a total of at least 41 laminated layers.

16. The film of claim 1, wherein the multilayer film is laminated to a transparent resin film.

17. The use of a multilayer film as defined in claim 1 as a near infrared light reflecting film for a front panel of a plasma display.


**Patentansprüche**

1. Nahes Infrarotlicht reflektierende Folie für eine Frontplatte eines Plasmadisplays, die eine mehrschichtige Folie aufweist, wobei die mehrschichtige Folie eine erste Schicht aufweist, die im Wesentlichen aus einem Polyester besteht, der als eine hauptwiederkehrende Einheit Ethylen-2,6-naphthalindicarboxylat enthält, und eine zweite Schicht aufweist, die im Wesentlichen aus einem thermoplastischen Harz besteht, das einen geringeren Brechungsindex aufweist als der Polyester, worin die ersten und zweiten Schichten jeweils eine Dicke von 0,05 bis 0,3 μm aufweisen und abwechselnd geschichtet sind, so dass ein Schichtenverbund gebildet wird, der zumindest 11 Schichten aufweist, wobei sich zumindest entweder die ersten Schichten oder die zweiten Schichten in der Dicke unterscheiden, wobei eine Schicht mit einer Maximaldicke zumindest 1,2 mal so dick ist wie eine Schicht mit einer Minimaldicke, wobei zumindest entweder die ersten Schichten oder die zweiten Schichten zumindest in eine Richtung ausgerichtet sind und die mehrschichtige Folie eine Lichtdurchlässigkeit von nicht weniger als 70 % aufweist.

2. Folie nach Anspruch 1, worin die dickste Schicht zumindest 1,3 mal so dick ist wie die dünnste Schicht.

3. Folie nach Anspruch 1 oder 2, worin zumindest entweder die ersten Schichten oder die zweiten Schichten zumindest zwei Gruppen von Schichten aufweisen, die die gleiche Dicke haben, und wobei sich Schichten zwischen den Gruppen von Schichten in der Dicke unterscheiden.

4. Folie nach Anspruch 1 oder 2, worin zumindest entweder die ersten Schichten oder die zweiten Schichten eine Vielzahl von Schichten aufweisen, deren Dicken gleichmäßig in eine Schichtungsrichtung ab- oder zunehmen.

5. Folie nach Anspruch 1 oder 2, worin sowohl die ersten Schichten als auch die zweiten Schichten zumindest zwei Gruppen von Schichten aufweisen, die die gleiche Dicke aufweisen, und sich Schichten zwischen den Gruppen von Schichten in der Dicke unterscheiden.

6. Folie nach Anspruch 1 oder 2, worin sowohl die ersten Schichten als auch die zweiten Schichten eine Vielzahl von Schichten aufweisen, deren Dicken gleichmäßig in eine Schichtungsrichtung ab- oder zunehmen.

7. Folie nach Anspruch 1 oder 2, worin zumindest entweder die erste Schicht oder die zweite Schicht 0,001 bis 0,5 Gew.-% inerte Partikel enthält, die einen durchschnittlichen Partikeldurchmesser von 0,01 bis 2 μm aufweisen.

8. Folie nach Anspruch 7, worin die inerten Partikel zumindest eines ausgewählt aus einer Gruppe bestehend aus Siliciumdioxid, Aluminiumoxid, Calciumcarbonat, Calciumphosphat, Kaolin, Talk, einem Silicon, einem quervernetzten Polystyrol und einem Styrol-Divinylbenzol-Copolymer sind.

9. Folie nach Anspruch 7, worin das inerte Partikel ein inertes Partikel ist, das ein langer Durchmesser/kurzer Durchmesser-Verhältnis in der Größe von 1,2 aufweist.

10. Folie nach Anspruch 1, worin das thermoplastische Harz in der zweiten Schicht ein Polyester ist, der Ethylenterephthalat als eine hauptwiederkehrende Einheit enthält und einen Schmelzpunkt von 210 bis 245˚C aufweist.

11. Folie nach Anspruch 10, worin das thermoplastische Harz in der zweiten Schicht Ethylen-2,6-naphthalindicarboxylat als eine untergeordnete wiederkehrende Einheit enthält.

**12.** Folie nach Anspruch 1, worin das thermoplastische Harz in der zweiten Schicht Ethylen-2,6-naphthalindicarboxylat als eine hauptwiederkehrende Einheit und Ethylenisophthalat als eine untergeordnete wiederkehrende Einheit enthält und einen Schmelzpunkt von 210 bis 245˚C aufweist.

**13.** Folie nach Anspruch 1, worin das thermoplastische Harz in der zweiten Schicht eine Mischung aus einem Polyethylen-2,6-naphthalindicarboxylat und einem Polyethylenterephthalat sowie eine Mischung aus einem Polyethylen-2,6-napthalindicarboxylat und einem Ethylenterephthalat/Ethylenisophthalat-Copolymer ist.

**14.** Folie nach Anspruch 1, worin das thermoplastische Harz in der zweiten Schicht ein syndiotaktisches Polystyrol ist, das einen Schmelzpunkt von 220 bis 270˚C aufweist.

**15.** Folie nach Anspruch 1, die eine Gesamtzahl von zumindest 41 geschichteten Schichten aufweist.

**16.** Folie nach Anspruch 1, worin die mehrschichtige Folie auf eine transparente Harzfolie geschichtet ist.

**17.** Verwendung einer mehrschichtigen Folie nach Anspruch 1
als eine nahes Infrarotlicht reflektierende Folie für eine Frontplatte eines Plasmadisplays.

**Revendications**

**1.** Film réfléchissant la lumière infrarouge proche pour panneau avant d'un écran plasma, qui comprend un film multicouche, ledit film multicouche comprenant une première couche essentiellement constituée d'un polyester contenant de l'éthylène-2,6-naphtalènedicarboxylate comme principal motif récurrent et une deuxième couche essentiellement constituée d'une résine thermoplastique ayant un indice de réfraction plus faible que l'indice de réfraction du polyester, dans lequel :

les première et deuxième couches ont chacune une épaisseur de 0,05 à 0,3 $\mu$m et sont stratifiées de façon alternée de manière à former un stratifié comprenant au moins 11 couches,
au moins les premières couches ou bien les deuxièmes couches ayant des épaisseurs différentes ;
une couche ayant une épaisseur maximale est au moins 1,2 fois plus épaisse qu'une couche ayant une épaisseur minimale, et
au moins les premières couches ou bien les deuxièmes couches sont orientées au moins dans une direction ; et ledit film multicouche possède une transmittance de la lumière qui n'est pas inférieure à 70%.

**2.** Film selon la revendication 1, dans lequel la couche la plus épaisse est au moins 1,3 fois plus épaisse que la couche la plus mince.

**3.** Film selon l'une quelconque des revendications 1 à 2, dans lequel au moins les premières couches ou bien les deuxièmes couches comprennent au moins deux groupes de couches de même épaisseur, et les couches situées entre les groupes de couches ont des épaisseurs différentes.

**4.** Film selon l'une quelconque des revendications 1 à 2, dans lequel au moins les premières couches ou bien les deuxièmes couches comprennent une pluralité de couches dont les épaisseurs diminuent ou augmentent progressivement dans une direction de stratification.

**5.** Film selon l'une quelconque des revendications 1 à 2, dans lequel à la fois les premières couches et les deuxièmes couches comprennent au moins deux groupes de couches de même épaisseur et les couches situées entre les groupes de couches ont des épaisseurs différentes.

**6.** Film selon l'une quelconque des revendications 1 à 2, dans lequel à la fois les premières couches et les deuxièmes couches comprennent une pluralité de couches dont les épaisseurs diminuent ou augmentent progressivement dans une direction de stratification.

**7.** Film selon l'une quelconque des revendications 1 à 2, dans lequel au moins la première couche ou la deuxième couche contient 0,001 à 0,5% en poids de particules inertes ayant un diamètre moyen de particule de 0,01 à 2 $\mu$m.

**8.** Film selon la revendication 7, dans lequel les particules inertes sont au moins un type de particules choisi dans le groupe constitué par la silice, l'alumine, le carbonate de calcium, le phosphate de calcium, le kaolin, le talc, une silicone, un polystyrène réticulé et un copolymère styrène-divinylbenzène.

9. Film selon la revendication 7, dans lequel la particule inerte est une particule inerte possédant un rapport long diamètre/court diamètre pouvant atteindre 1,2.

10. Film selon la revendication 1, dans lequel la résine thermoplastique dans la deuxième couche est un polyester contenant de l'éthylène téréphtalate comme principal motif récurrent et ayant un point de fusion de 210 à 245°C.

11. Film selon la revendication 10, dans lequel la résine thermoplastique dans la deuxième couche contient de l'éthylène-2,6-naphtalènedicarboxylate comme motif récurrent secondaire.

12. Film selon la revendication 1, dans lequel la résine thermoplastique dans la deuxième couche contient de l'éthylène-2,6-naphtalènedicarboxylate comme motif récurrent principal et de l'éthylène isophtalate comme motif récurrent secondaire et possède un point de fusion de 210 à 245°C.

13. Film selon la revendication 1, dans lequel la résine thermoplastique dans la deuxième couche est un mélange d'un poly(éthylène-2,6-naphtalènedicarboxylate) et d'un poly(éthylène téréphtalate) et un mélange d'un poly(éthylène-2,6-naphtalènedicarboxylate) et d'un copolymère éthylène téréphtalate/éthylène isophtalate.

14. Film selon la revendication 1, dans lequel la résine thermoplastique dans la deuxième couche est un polystyrène syndiotactique ayant un point de fusion de 220 à 270°C.

15. Film selon la revendication 1, comprenant un total d'au moins 41 couches stratifiées.

16. Film selon la revendication 1, dans lequel le film multicouche est stratifié sur un film de résine transparent.

17. Utilisation d'un film multicouche tel que défini dans la revendication 1 comme film réfléchissant la lumière infrarouge proche pour panneau avant d'un écran plasma.

**EP 1 350 618 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4295804 A
- JP 9506837 A
- JP 9506984 A
- JP 10156991 A
- EP 0735962 A
- WO 9619347 A
- WO 9701778 A
- EP 0735952 A
- JP 2000141567 A